# EUROPÄISCHE PATENTSCHRIFT

(11) **EP 0 906 578 B1**
(45) Veröffentlichungstag und Bekanntmachung des Hinweises auf die Patenterteilung: **01.12.1999**
(21) Anmeldenummer: 96930987.1
(22) Anmeldetag: 30.08.1996
(51) Int. Cl.: G01P 15/06, G01P 21/00, G01P 15/08

(54) **BESCHLEUNIGUNGSGRENZWERTSENSOR**
ACCELERATION LIMIT SENSOR
DETECTEUR D'UNE VALEUR LIMITE D'ACCELERATION

(43) Veröffentlichungstag der Anmeldung: 07.04.1999
(73) Patentinhaber: FRAUNHOFER-GESELLSCHAFT ZUR FÖRDERUNG DER ANGEWANDTEN FORSCHUNG E.V., 80636 München (DE)
(72) Erfinder: GEIGER, Wolfram, D-70794 Filderstadt (DE); KÜCK, Heinz, D-01465 Langebrück (DE); ERLEBACH, Axel, D-01127 Dresden (DE); FISCHER, Wolf-Joachim, D-01324 Dresden (DE)
(74) Vertreter: Schoppe, Fritz, Dipl.-Ing.
(86) Internationale Anmeldenummer: EP9603821
(87) Internationale Veröffentlichungsnummer: WO9809174

(56) Entgegenhaltungen:
- WO-A-91/11722
- DE-C- 748 408
- PATENT ABSTRACTS OF JAPAN vol. 7, no. 212 (P-224) [1357] , 20.September 1983 & JP 58 106463 A (NITSUSHIN DENKI K.K.), 24.Juni 1983,

## Beschreibung

Die vorliegende Erfindung bezieht sich auf einen Beschleunigungsgrenzwertsensor und auf ein Verfahren zum Herstellen eines Beschleunigungsgrenzwertsensors.

Es ist gemäß dem Stand der Technik bekannt, zur Überwachung von Beschleunigungs- und Stoß-Vorgängen, beispielsweise beim Transport wertvoller empfindlicher Güter, makroskopische mechanische Anordnungen zu verwenden. Eine derartige Anordnung weist einen durchsichtigen Kunststoffbehälter mit einer Metallkugel, die durch vier Federn in einer Ruheposition gehalten ist, auf. Bei einer mechanischen Beschleunigung oder bei einer Stoßbelastung oberhalb eines Grenzwertes verläßt die Kugel ihre Ruheposition. Nachfolgend kann durch eine optische Betrachtung festgestellt werden, ob ein solcher bekannter Grenzwertsensor einer Beschleunigung oder Stoßbelastung oberhalb eines Grenzwertes ausgesetzt war. Derartige makroskopische mechanische Anordnungen sind aufwendig. Ferner können derartige bekannte Anordnungen nur optisch, d.h. durch eine Betrachtung, ausgelesen werden.

In der Technik sind ferner zahlreiche Anwendungen mikromechanischer Strukturen zur Erfassung von Beschleunigungen, Geschwindigkeiten und Kräften bekannt. Mittels derartiger mikromechanischer Strukturen können beispielsweise Beschleunigungserfassungen mittels kapazitiver Messungen sowie anderen Meßprinzipien, beispielsweise mittels eines Schließens von Kontakten, durchgeführt werden. Derartige mikromechanische Strukturen sind jedoch nicht in der Lage, Informationen über die erfaßten Beschleunigungen mechanisch und damit ohne eine Hilfsenergie zu speichern.

Die DE 748 408 C zeigt einen Höchstbeschleunigungsmesser, bei dem eine Höchstbeschleunigung in Beziehung zu einer bleibenden Verformung oder zum Bruch eines Baustoffs gesetzt wird. Dazu sind aus einem spröden oder bleibend verformbaren Baustoff gebildete Stäbe einseitig mit einer Grundplatte verbunden, während an den nicht eingespannten Enden der Stäbe Massen angebracht sind. Der höchstbeanspruchte Querschnitt eines derart mit einer Masse versehenen Stabs, und somit die Sollbruchstelle, liegt jeweils an der Einspannstelle des Stabs in der Grundplatte. Durch ein Zubruchgehen der Stäbe kann somit gemäß der De 748 408 C eine zu ermittelnde Höchstbeschleunigung festgestellt werden.

Die WO-A-9111722 beschreibt einen Halbleiter-Beschleunigungssensor, der aus einem Befestigungsabschnitt, einer geätzten Siliziumfeder sowie einer an derselben angebrachten Masse besteht. Über die Länge der Feder ist eine Widerstandsschleife vorgesehen, die einen Federbruchanzeiger darstellt. Dieser Federbruchanzeiger dient dazu, die Betriebsbereitschaft des in der WO-A-9111722 offenbarten Beschleunigungssensors, bzw. eine Beschädigung desselben anzuzeigen. Die WO-A-9111722 offenbart keinen Beschleunigungsgrenzwertsensor, bei dem durch das Abbrechen einer Sollbruchstelle das Auftreten einer Beschleunigung, die eine vorbestimmte Beschleunigung übersteigt, angezeigt werden soll.

Ausgehend von dem genannten Stand der Technik besteht die Aufgabe der vorliegenden Erfindung darin, einen Beschleunigungsgrenzwertsensor zu schaffen, der einen einfachen Aufbau aufweist, kostengünstig herstellbar und ständig meßbereit ist, und ferner in der Lage ist, ohne Hilfsenergie zu speichern, daß der Sensor einer eine vorbestimmte Beschleunigung übersteigenden Beschleunigung ausgesetzt war.

Diese Aufgabe wird durch einen Beschleunigungsgrenzwertsensor gemäß Anspruch 1 gelöst.

Eine weitere Aufgabe der vorliegenden Erfindung besteht darin, ein Verfahren zur Herstellung eines Beschleunigungsgrenzwertsensors zu schaffen.

Diese Aufgabe wird durch ein Verfahren gemäß Anspruch 8 gelöst.

Bei dem erfindungsgemäßen Beschleunigungsgrenzwertsensor sind die Trägereinrichtung, die seismische Masse und die Verbindungseinrichtung einstückig mittels eines mikromechanischen Verfahrens aus einer Halbleiterschicht gebildet, derart, daß die Sollbruchstelle der Verbindungseinrichtung durch eine Gestaltung der Halbleiterschicht gebildet ist. Ein derartiger Beschleunigungsgrenzwertsensor weist einen einfachen Aufbau auf, ist kostengünstig herstellbar, ständig meßbereit und benötigt grundsätzlich keine Hilfsenergie für die Funktion. Speziell kann der erfindungsgemäße Sensor bei Langzeiteinsätzen bei einem geringsten Energieverbrauch in batteriebetriebenen Systemen vorteilhaft eingesetzt und zu einem beliebigen Zeitpunkt elektrisch ausgelesen werden.

Der mikromechanische Beschleunigungsgrenzwertsensor weist Bruchstrukturen auf, die aus einer seismischen Masse in der Form einer Platte oder einer ähnlichen Struktur und aus an einem Substrat und an der Masse befestigten Balken bestehen. Dabei können diese Bruchstrukturen eine Leiterschleife bilden, die bei einem Bruch der Balken unterbrochen wird. Somit können die Grenzwertsensoren gemäß der vorliegenden Erfindung elektrisch oder aber auch optisch, beispielsweise durch eine Inaugenscheinnahme, ausgelesen werden. Derartige Bruchstrukturen lassen sich als Sensoren für Grenzbeschleunigungen aller Art, als Nachweiseinrichtungen für bestimmte Belastungsereignisse von Geräten und, wenn mehrere derselben in Arrayform in einem System angeordnet sind, als digitale Beschleunigungssensoren verwenden.

Weiterbildungen der vorliegenden Erfindung sind in den abhängigen Ansprüchen dargelegt.

Bevorzugte Ausführungsbeispiele der vorliegenden Erfindung werden nachfolgend bezugnehmend auf die beiliegenden Zeichnungen näher erläutert. Es zeigen:
- Fig. 1: eine schematische, perspektivische Ansicht eines Beschleunigungsgrenzwertsensors, der gemäß dem Verfahren der vorliegenden Erfindung hergestellt ist;
- Fig. 2: eine schematische Draufsicht des Beschleunigungsgrenzwertsensors von Fig. 1;
- Fig. 3: eine schematische, perspektivische Ansicht eines Ausführungsbeispiels eines Beschleunigungsgrenzwertsensors gemäß der vorliegenden Erfindung;
- Fig. 4: eine schematische Draufsicht des Beschleunigungsgrenzwertsensors von Fig. 3;
- Fig. 5: eine schematische Schnittansicht des zweiten Ausführungsbeispiels des Beschleunigungsgrenzwertsensors entlang der Linie A-A von Fig. 4; und
- Fig. 6: eine grobe, schematische Schnittdarstellung eines Ausführungsbeispiels eines Beschleunigungsgrenzwertsensors gemäß der vorliegenden Erfindung.

Mittels eines mikromechanischen Beschleunigungsgrenzwertsensors gemäß der vorliegenden Erfindung können Überschreitungen von Grenzbeschleunigungen oder Stößen erkannt und das Auftreten derselben gespeichert werden, so daß derartige Belastungsereignisse, beispielsweise bei einem wertvollen empfindlichen Gerät, nachweisbar sind. Dies ist möglich, da der erfindungsgemäße Beschleunigungsgrenzwertsensor eine Bruchstruktur mit einer Sollbruchstelle aufweist, die beim Auftreten einer bestimmten Beschleunigung bricht. Bei bevorzugten Ausführungsbeispielen ist die Sollbruchstelle Teil einer Stromschleife, wobei die Stromschleife unterbrochen wird, wenn die Sollbruchstelle bricht. Dieses Unterbrechen der Stromschleife kann später durch das Anlegen einer Spannung festgestellt werden. Alternativ kann das Brechen durch eine visuelle Beobachtung erfaßt werden. Wird ein Array von Bruchstrukturen für verschiedene Beschleunigungswerte verwendet, können dabei Informationen über die Höhe der Beschleunigungsbelastung gewonnen werden.

Die vorliegende Erfindung basiert auf der Tatsache, daß sich die Bruchstruktur bei einer Beschleunigungsbelastung verformt, wodurch sich eine mechanische Spannung aufbaut, wobei der oder die Balken, die als eine Verbindungseinrichtung zwischen der seismischen Masse und einem Träger wirken, an einer vorgesehenen Sollbruchstelle derselben brechen, wenn diese mechanische Spannung einen vorbestimmten bekannten Wert überschreitet. Der Bruch der Balken unterbricht beispielsweise eine Leiterschleife und führt dazu, daß bei einem späteren Anlegen von Spannung kein Strom fließt. Dies ist ein Indikator dafür, daß die Struktur eine Beschleunigungsbelastung erfahren hat, die einen bestimmten Grenzwert überstieg. Alternativ kann die Struktur aber auch optisch durch Inaugenscheinnahme oder durch ein optisches Gerät mit einer geringen Vergrößerung ausgelesen werden.

Gemäß bevorzugten Ausführungsbeispielen der vorliegenden Erfindung werden die Beschleunigungsgrenzwertsensoren unter Verwendung der Siliziumtechnik als Mikrochips gefertigt. Dazu werden beispielsweise SIMOX-Wafer oder andere SOI-Wafer verwendet.

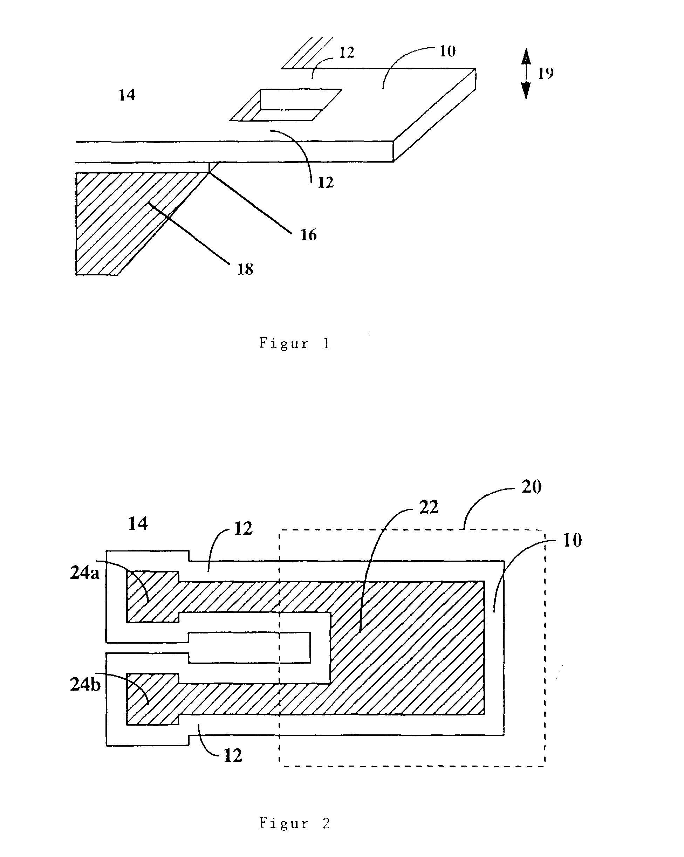

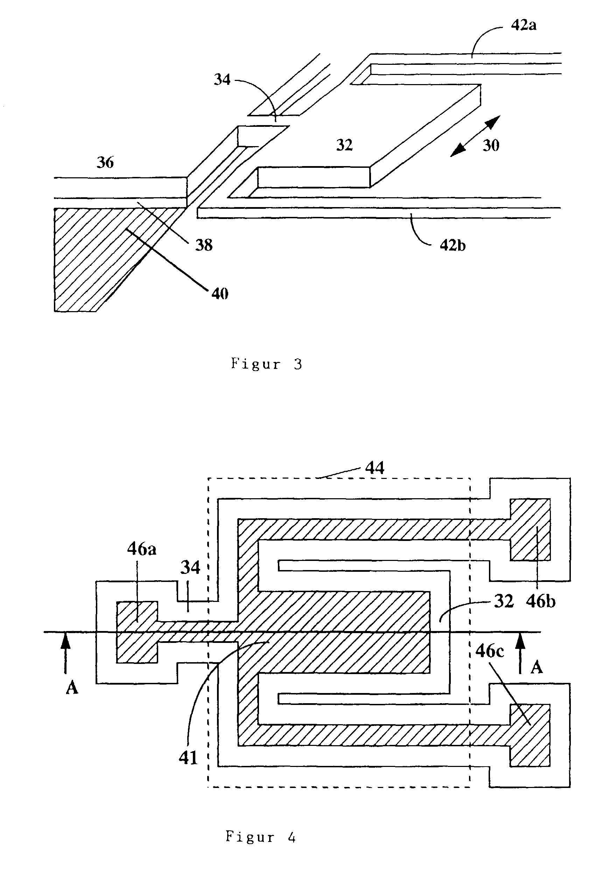

In den Fig. 1 und 2 ist ein erstes Ausführungsbeispiel eines erfindungsgemäß hergestellten Beschleunigungsgrenzwertsensors dargestellt. Der Beschleunigungsgrenzwertsensor weist eine seismische Masse 10 auf, die über zwei Balken 12, die als eine Verbindungseinrichtung wirken, mit einer Trägereinrichtung, die allgemein mit 14 bezeichnet ist, verbunden ist. Bei dem dargestellten Ausführungsbeispiel sind die seismische Masse 10, die Balken 12 und die Trägereinrichtung 14 einstückig aus einer planaren Siliziumschicht gebildet. Im Bereich der Trägereinrichtung 14 befindet sich die Siliziumschicht auf einer Siliziumoxidschicht 16. Die Siliziumoxidschicht 16 befindet sich wiederum auf einem Siliziumsubstrat 18.

Die Balken 12, und damit die Sollbruchstelle dieses Ausführungsbeispiels eines erfindungsgemäßen Beschleunigungsgrenzwertsensors, sind derart ausgelegt, daß sie gegenüber Beschleunigungen senkrecht zur Chipebene, d.h. Beschleunigungen in der Richtung des Pfeils 19 in Fig. 1, empfindlich sind. D.h., daß die Sollbruchstellen brechen, wenn die seismische Masse 10 mit einer Beschleunigung in der Richtung des Pfeils 19 beaufschlagt wird, die eine vorbestimmte Beschleunigung übersteigt.

Fig. 2 zeigt eine schematische Draufsicht des in Fig. 1 dargestellten Beschleunigungsgrenzwertsensors, wobei nur die seismische Masse 10, die Balken 12 und der aus der Siliziumschicht bestehende Teil der Trägereinrichtung 14 dargestellt sind. Die gestrichelte Linie 20 kennzeichnet den Teil der Siliziumschicht, der "wegbricht", wenn der Beschleunigungsgrenzwertsensor mit einer Beschleunigung beaufschlagt wird, die den vorbestimmten Beschleunigungswert übersteigt. In Fig. 2 ist ferner eine Leiterbahn 22, die auf der Siliziumschicht angebracht ist, dargestellt. Diese Leiterbahn 22 weist Kontakte 24a und 24b auf, mittels derer durch das Anlegen einer Spannung erfaßt werden kann, wenn der Beschleunigungsgrenzwertsensor mit einer die Grenzbeschleunigung übersteigenden Beschleunigung beaufschlagt worden ist, d.h. wenn der von der gestrichelten Linie 20 eingerahmte Teil "weggebrochen" ist. In diesem Fall ist der durch die Leiterbahn 22 gebildete geschlossene Stromweg unterbrochen.

In den Fig. 3 und 4 ist ein Ausführungsbeispiel eines erfindungsgemäßen Beschleunigungsgrenzwertsensors dargestellt. Dieser Sensor ist für eine Empfindlichkeit für Beschleunigungen in der Chipoberfläche, d.h. für Beschleunigungen in der Richtung des Pfeils 30 in Fig. 3, ausgelegt. Wiederum ist eine seismische Masse 32, eine Verbindungseinrichtung, die durch einen Balken 34 gebildet ist, und eine Trägereinrichtung 36 einstückig aus einer Siliziumschicht gebildet. Der die Trägereinrichtung bildende Teil der Siliziumschicht 36 befindet sich auf einer Oxidschicht 38, die sich auf einem Siliziumsubstrat 40 befindet.

Wird die seismische Masse 32 in der Richtung des Pfeils 30 mit einer Beschleunigung beaufschlagt, die eine vorbestimmte Beschleunigung übersteigt, bricht der Balken 34, der die Verbindungseinrichtung zwischen seismischer Masse 32 und Trägervorrichtung 36 bildet. Wie in Fig. 4 dargestellt ist, kann wiederum eine Leiterbahn 41 auf der Siliziumschicht angebracht sein. Auf diese Leiterbahn kann verzichtet werden, wenn die Siliziumschicht selbst derart dotiert ist, daß dieselbe stromführend ist. Wie ferner in den Fig. 3 und 4 zu sehen ist, sind an der seismischen Masse 32 dünne Verbindungen 42a, 42b, die aus der Siliziumschicht gebildet sind, angebracht. Diese Verbindungen 42a und 42b stellen eine weitere Verbindung zu dem die Trägereinrichtung bildenden Teil der Siliziumschicht dar. Die als Stromzuführung dienenden Verbindungen 42a und 42b sind geometrisch derart ausgestaltet, daß die mechanischen Eigenschaften des Systems durch dieselben nicht wesentlich beeinflußt werden.

In Fig. 4 ist der Teil der Sensorvorrichtung, der "weg-bricht", wenn der Beschleunigungsgrenzwertsensor einer Beschleunigung ausgesetzt ist, die eine vorbestimmte Beschleunigung übersteigt, durch gestrichelte Linien 44 gekennzeichnet. Die Leiterbahn ist derart über der Trägereinrichtung, den Balken 34 und die Verbindungen 42a und 42b ausgebildet, daß der Stromweg unterbrochen ist, wenn der Beschleunigungsgrenzwertsensor einer übermäßigen Beschleunigung ausgesetzt wurde. Dies kann durch das Anlegen einer Spannung an zwei von Kontakten 46a, 46b und 46c elektrisch erfaßt werden.

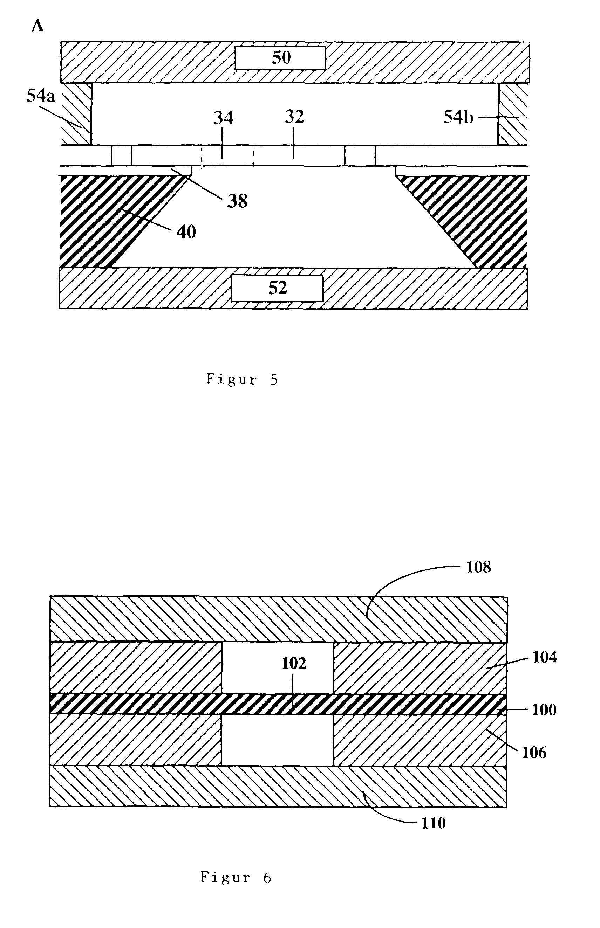

Fig. 5 zeigt eine schematische Schnittdarstellung des in den Fig. 3 und 4 dargestellten Beschleunigungsgrenzwertsensors entlang der Linie A-A in Fig. 4. Aus dieser Darstellung ist zu entnehmen, wie der Beschleunigungsgrenzwertsensor aus einem System, das aus einer Siliziumschicht, einer Oxidschicht 38 und einem Siliziumsubstrat 40 besteht, hergestellt wurde. Dazu wird zuerst die Siliziumschicht in die in der Fig. 3 dargestellte Struktur strukturiert. Nachfolgend wird unterhalb der Bruchstruktur, die bei einer übermäßigen Beschleunigung "wegbricht", das Siliziumsubstrat 40 und die Siliziumoxidschicht 38 weggeätzt. Die Ätzung von Siliziumschicht, Siliziumsubstrat und Oxidschicht kann auch in einer anderen Reihenfolge geschehen. Die fertige Struktur wird nachfolgend mittels Abdeckungen 50 und 52 eingeschlossen. Die Abdeckung 52 ist an der Unterseite des Siliziumsubstrats 40 angebracht. Die Abdeckung 50 ist über Verbindungseinrichtungen 54a und 54b auf der Siliziumschicht, in der die Sensorstruktur gebildet ist, angebracht. Derartige Abdeckungen liefern einen Schutz der Sensorstruktur vor einer Verschmutzung, vor Zerstörungen oder anderen Beeinträchtigungen.

Nachfolgend wird teilweise bezugnehmend auf Fig. 6 auf geeignete Verfahren zur Herstellung eines erfindungsgemäßen Beschleunigungsgrenzwertsensors eingegangen. Fig. 6 ist eine schematische Querschnittansicht, die grob die Bauteile eines erfindungsgemäßen Sensors zeigt. In einer Platte oder Scheibe 100 ist eine Bruchstruktur 102 gebildet. Auf einer oder alternativ auf beiden Seiten der Scheibe 100 sind Trägerschichten 104 bzw. 106 vorgesehen. Die Trägerschichten sind im Bereich der Bruchstruktur 102 entfernt. Auf den Trägerschichten 104 und 106 sind Abdeckungen 108 und 110 angebracht, die einen Schutz der in der Scheibe 100 gebildeten Bruchstruktur 102 von beiden exponierten Seiten liefern. Es ist offensichtlich, daß, wenn eine der oder die Abdeckungen 108 und 110 nicht vorgesehen sind, eine der Trägerschichten 104 oder 106 entfallen kann. Ebenso kann die Trägerschicht 104 oder 106 bei geeigneter Ausbildung der Abdeckungen 108 und 110 entfallen.

Die Bruchstruktur des erfindungsgemäßen Beschleunigungsgrenzwertsensors wird in einem geeigneten, im Falle einer späteren elektrischen Auslesung vorzugsweise leitfähigen Material, das in der Form einer dünnen Schicht oder Platte vorliegt, strukturiert. Die Strukturierung wird beispielsweise durch einfache mechanische Verfahren wie Stanzen, Schneiden oder Sägen, durch Lasertrennverfahren, durch lithographische Verfahren, durch Ätzverfahren oder dergleichen durchgeführt. Die Bruchstruktur kann dabei mit einer der Trägerschichten 104, 106 während der Strukturierung fest verbunden sein, wobei die Trägerschicht entweder eine nicht-leitende Schicht ist, oder zwischen der Trägerschicht und der Platte, in der die Bruchstruktur gebildet ist, ein Isolator (nicht dargestellt) angeordnet ist. Der Träger und die eventuell vorliegende Isolationsschicht unterhalb der Bruchstruktur 102 werden unterhalb der Bruchstruktur entfernt. Alternativ kann die Bruchstruktur auch nach der Strukturierung durch Fügetechniken, beispielsweise durch Kleben oder durch anodisches Bonden oder andere Fügeverfahren mit einer Trägerschicht verbunden werden, wobei die Trägerschicht wiederum entweder eine nicht-leitende Schicht ist oder zwischen der Trägerschicht und der Bruchstruktur ein Isolator (nicht dargestellt) angeordnet ist. Auf die gleiche Art und Weise kann auf der anderen Seite der Platte 100 eine Trägerschicht angebracht werden. Auf diesen Trägerschichten 104 und 106 können zum Schutz vor Verschmutzungen, Zerstörungen oder anderen Beeinträchtigungen der Bruchstruktur 102 Abdeckungen 108 und 110 angebracht werden. Bei geeigneter Ausbildung der Abdeckungen 108 und 110 kann auf die Trägerschichten verzichtet werden.

Im folgenden wird ein Verfahren zur Herstellung einer elektrisch auslesbaren Bruchstruktur näher erläutert. Auf den dünnen oberen Siliziumfilm eines SIMOX-Wafers wird eine zusätzliche Siliziumschicht mit einer geeigneten Dicke zur Einstellung des Beschleunigungsgrenzwerts durch Epitaxie aufgebracht. Danach wird das Leiterbahn- und Kontakt-System mit der Leiterschleife erzeugt. Die Leiterschleife kann durch eine Aluminium-Metallisierung oder durch eine Dotierung des Siliziums selbst gebildet werden.

Nach dem Aufbringen einer Trenchätzmaske und einer Rückseitenmaske erfolgt ein anisotropes Ätzen des Siliziums von der Rückseite her, sowie die naßchemische Entfernung des vergrabenen Oxids, um das Gebiet der Bruchstrukturen von unten her freizulegen. Dann wird eine Trenchätzung durchgeführt, die zur Strukturierung der Bruchstrukturen selbst führt. Diese Ätzungen können auch in einer anderen Reihenfolge durchgeführt werden. Bei den in den Fig. 2 und 4 dargestellten Beschleunigungsgrenzwertsensoren führt die Trenchätzung zu den dargestellten Umrissen der Siliziumschicht.

Nachfolgend wird das Vereinzeln und Häusen der Chips mit den Bruchstrukturen durchgeführt, wobei die Chips vor dem Sägen bzw. Vereinzeln durch eine geeignete Schutzschicht geschützt werden, die nach dem Sägen wieder entfernt wird. Alternativ können die Chips vor dem Sägen bzw. Vereinzeln beispielsweise durch anodisches Bonden oder Kleben mit einem unteren und oberen Deckel versehen werden, wie in Fig. 6 dargestellt ist.

Bei dem bevorzugten Ausführungsbeispiel zur Herstellung eines erfindungsgemäßen Beschleunigungsgrenzwertsensors wird folglich zuerst eine Schichtfolge Siliziumsubstrat-Oxidopferschicht-Siliziumschicht durch die Bearbeitung eines Siliziumwafers hergestellt. Die Oxidopferschicht kann beispielsweise auf der Basis eines SIMOX-Prozesses oder einer Oxidabscheidung erzeugt werden. Die Materialschicht in der nachfolgend die Bruchstruktur gebildet wird, kann beispielsweise durch Aufepitaxieren von Silizium auf den Siliziumfilm einer SOI-Scheibe oder durch eine Polysiliziumabscheidung hergestellt werden. Danach wird die rückseitige Entfernung des Substrats und des Oxids unterhalb der Bruchstruktur durch Rückseitenätzen durchgeführt. Nachdem diese Prozeßschritte, die meist naßchemisch oder im Dampf eines Ätzmittels durchgeführt werden, erfolgt sind, werden die Sensorstrukturen durch ein plasmatechnisches Trenchätzen erzeugt. Hierbei kann die SOI-Scheibe von der dem Ätzangriff nicht ausgesetzten Seite mit einer geeigneten Schutzschicht, z. B. Fotolack ganz oder teilweise bedeckt sein, um eine für das Verfahren schädliche Veränderung des Plasma-Ätzprozesses beim Beginn des Durchätzens der Schicht 100 zu vermeiden. Diese Schutzschicht wird anschließend wieder plasmatechnisch entfernt. Durch das Trenchätzen und das Entfernen der Schutzschicht wird die Sensorstruktur beweglich und empfindlich für Beschleunigungen. Für die Trenchätzung wird bei diesem Verfahren eine Maske aus den üblichen Passivierungsschichten bei Siliziumoxid, Siliziumnitrid oder Siliziumoxinitrid. Diese Schicht wird in ausreichender Dicke abgeschieden und in der üblichen Weise strukturiert, so daß die Metallkontaktierungsflächen der Bauelemente, die Bondpads, freigelegt werden und das gleichzeitig erfindungsgemäß die Ätzmaske für das Trenchätzen entsteht. Vor dem Trenchätzen werden dann die Metallkontaktierungsflächen mit einer Schutzschicht, beispielsweise Fotolack, so abgedeckt, daß sie beim Trenchätzen nicht beschädigt werden. Die Schutzschicht wird nach dem Trenchätzen entfernt. Der Trenchätzprozeß kann auch über eine Fotolackmaske erfolgen. Nachfolgend kann vorzugsweise durch anodisches Bonden ein oberer und ein unterer Deckel aufgebracht werden.

Mittels des oben beschriebenen Herstellungsverfahrens können unterschiedliche Mikrostrukturen hergestellt werden. Beispielsweise ist dieses Verfahren auch für die Herstellung von Beschleunigungssensoren mit Empfindlichkeit für Beschleunigungen in der Chipoberfläche oder senkrecht zur Chipoberfläche, von Gyroskopen sowie anderen mikroelektromechanischen Strukturen verwendbar.

Vorteilhaft an dem Herstellungsverfahren ist, daß zum einen die Beweglichkeit der Sensorstruktur durch einen trockenen plasmatechnischen Prozeß erreicht wird. Dadurch besteht bei diesem Verfahren nicht die Gefahr der bekannten Aneinanderhaftung der beweglichen Sensorstruktur und dem unbeweglichen Rest der Schicht 100 aufgrund von Kohäsions- und Adhäsionskräften im Zusammenhang mit der Entfernung des Ätzmediums nach erfolgter Ätzung mit flüssigem Ätzmedium oder mit dem Dampf des Ätzmediums als Ätzmedium. Weiterhin ist die Gefahr einer späteren Aneinanderhaftung gegenüber bekannten Verfahren dadurch dramatisch verringert, daß das Siliziumsubstrat im Bereich der Sensorstruktur 32 entfernt wurde, so daß hier keine Haftung auftreten kann.

Die vorliegende Erfindung schafft somit einen mikromechanischen Beschleunigungsgrenzwertsensor, der sich als Sensor für Grenzbeschleunigungen aller Art, als Nachweiseinrichtung für bestimmte Belastungsereignisse von Geräten und in Arrayform angefertigt als digitaler Beschleunigungssensor verwenden läßt. Der erfindungsgemäße Beschleunigungsgrenzwertsensor weist einen einfachen Aufbau auf, ist kostengünstig herstellbar und ständig meßbereit. Ferner ist der erfindungsgemäße Beschleunigungsgrenzwertsensor vorzugsweise elektrisch auslesbar. Der erfindungsgemäße Sensor ist somit zur Überwachung von Beschleunigungs- und Stoßvorgängen beim Transport wertvoller empfindlicher Güter vorteilhaft einsetzbar.

## Patentansprüche

1. Beschleunigungsgrenzwertsensor mit folgenden Merkmalen:
einer Trägervorrichtung (36);
einer seismischen Masse (32); und
einer Verbindungseinrichtung (34, 42a, 42b), mit der die seismische Masse (10; 32) an der Trägervorrichtung (14; 36) angebracht ist,
wobei die Verbindungseinrichtung (34, 42a, 42b) eine Sollbruchstelle aufweist, die die Verbindung zwischen der seismischen Masse (32) und der Trägervorrichtung (36) unterbricht, wenn die seismische Masse (32) mit einer Beschleunigung beaufschlagt wird, die eine vorbestimmte Beschleunigung übersteigt,
dadurch gekennzeichnet, daß
die Trägervorrichtung (36), die seismische Masse (32) und die Verbindungseinrichtung (34, 42a, 42b) einstückig mittels eines mikromechanischen Verfahrens aus einer Siliziumschicht gebildet sind, derart, daß die Siliziumschicht eine dieselbe durchdringende Öffnung aufweist, in der die seismische Masse (32) angeordnet ist und deren Umrandung die Trägervorrichtung (36) definiert, wobei die seismische Masse (32) an einer ersten Seite derselben mittels eines ersten balkenförmigen Verbindungsstücks (34), das die Sollbruchstelle definiert, mit der benachbarten Seite der Trägervorrichtung (36) verbunden ist, und wobei die seismische Masse mittels eines zweiten und eines dritten Verbindungsstücks (42a, 42b) mit der der benachbarten Seite gegenüberliegenden Seite der Trägervorrichtung (36) verbunden ist, wobei das zweite und das dritte Verbindungsstück (42a, 42b) als Stromzuführung dienen und im Bereich der ersten Seite der seismischen Masse (32) mit derselben verbunden sind und sich symmetrisch auf beiden Seiten der seismischen Masse (32) zu der gegenüberliegenden Seite der Trägervorrichtung erstrecken, wobei das zweite und das dritte Verbindungsstück (42a, 42b) derart ausgebildet sind, daß sie die mechanischen Eigenschaften der seismischen Masse (32) nicht wesentlich beeinflussen.

2. Beschleunigungsgrenzwertsensor gemäß Anspruch 1, bei dem der die Trägervorrichtung (36) bildende Teil der Siliziumschicht auf einer Oxidschicht (38) angebracht ist, die auf einem Siliziumsubstrat (40) angebracht ist.

3. Beschleunigungsgrenzwertsensor gemäß Anspruch 1 oder 2, bei dem durch die Sollbruchstelle ein geschlossener Stromweg gebildet ist, der unterbrochen wird, wenn die Verbindung zwischen der seismischen Masse (32) und der Trägervorrichtung (36) unterbrochen wird.

4. Beschleunigungsgrenzwertsensor gemäß Anspruch 3, bei dem der Stromweg durch eine Dotierung der Siliziumschicht gebildet ist.

5. Beschleunigungsgrenzwertsensor gemäß Anspruch 3, bei dem der Stromweg durch eine auf die Siliziumschicht aufgebrachte Leiterbahn (41) gebildet ist.

6. Beschleunigungsgrenzwertsensor gemäß einem der Ansprüche 1 bis 5, bei dem die Verbindungseinrichtung (34, 42a, 42b) und die seismische Masse (32) von an der Trägereinrichtung angebrachten Abdeckungen (50, 52) eingeschlossen sind.

7. Beschleunigungsgrenzwertsensor gemäß einem der Ansprüche 1 bis 6, der eine Mehrzahl von seismischen Massen (32) und Verbindungseinrichtungen (34, 42a, 42b) aufweist, die an der Trägervorrichtung (36) befestigt sind, wobei die Sollbruchstellen der Verbindungseinrichtungen (34, 42a, 42b) bei unterschiedlichen vorbestimmten Beschleunigungen brechen.

8. Verfahren zum Herstellen des Beschleunigungsgrenzwertsensors mit einer Trägervorrichtung (14; 36), einer seismischen Masse (10; 32), und einer Verbindungseinrichtung (12; 34), mit der die seismische Masse (10; 32) an der Trägereinrichtung (14; 36) angebracht ist, wobei die Verbindungseinrichtung (12; 34) eine Sollbruchstelle aufweist, die die Verbindung zwischen der seismischen Masse (10; 32) und der Trägereinrichtung (14; 36) unterbricht, wenn die seismische Masse (10; 32) mit einer Beschleunigung beaufschlagt wird, die eine vorbestimmte Beschleunigung übersteigt, gekennzeichnet durch folgende Herstellungsschritte:
Bereitstellen eines SIMOX-Substrats oder eines anderen SOI-Substrats oder eines Siliziumsubstrats mit einer Siliziumoxidschicht und einer Siliziumstartschicht;
Abscheiden einer Siliziumepitaxieschicht oder einer Silizium-CVD-Schicht auf dem dünnen Siliziumfilm des SIMOX-Substrats oder auf der Oxidschicht des SOI-Substrats oder auf der Siliziumstartschicht;
Erzeugen eines Leiterbahnsystems und eines Kontaktierungssystems auf der zuletzt abgeschiedenen Schicht;
Erzeugen und Strukturieren einer Passivierungsschicht über der abgeschiedenen Schicht und dem Metallisierungssystem und dem Kontaktierungssystem mit der Eigenschaft, daß diese Schicht bei der später folgenden Trenchätzung als Ätzmaske wirkt und bei der Trenchätzung nicht, nicht vollständig oder vollständig verbraucht wird;
Herstellen einer Rückseitenmaske und Durchführen einer Rückseitenätzung, wobei die Oxidschicht als Ätzstopp wirkt;
Durchführen einer Ätzung von der Scheibenrückseite zur Entfernung der Oxidschicht;
anschließendes Durchführen der Trenchätzung zum Ausbilden und Freisetzen von Sensorstrukturen.

9. Verfahren nach Anspruch 8 zum Herstellen eines Beschleunigungsgrenzwertsensors nach einem der Ansprüche 1 bis 7.

10. Verfahren nach Anspruch 8 oder 9, mit dem zusätzlichen Verfahrensschritt des Erzeugens einer Dotierung in der abgeschiedenen Siliziumepitaxieschicht nach dem Aufbringen derselben.

11. Verfahren nach einem der Ansprüche 8 bis 10, bei dem die Passivierungsschicht nach der Trenchätzung als Passivierung der Dotierungen, des Metallisierungssystems und des Kontaktierungssystems dient.

12. Verfahren nach einem der Ansprüche 8 bis 11, mit dem zusätzlichen Verfahrensschritt des Aufbringens und Strukturieren einer Schutzschicht auf der Vorderseite der Siliziumscheibe vor Trenchätzen und Entfernen nach dem Trenchätzen.

13. Verfahren nach einem der Ansprüche 8 bis 12, mit dem zusätzlichen Verfahrensschritt des Aufbringens einer vollständigen oder teilweisen Schutzschicht auf der Rückseite vor dem Trenchätzen und Entfernen nach dem Trenchätzen.

14. Verfahren nach einem der Ansprüche 8 bis 13, mit dem zusätzlichen Verfahrensschritt des Trenchätzens über eine Fotolackmaske.

## Claims

1. An acceleration threshold sensor having the following features:
a support means (36);
a seismic mass (32); and
a connection means (34, 42a, 42b) with the aid of which the seismic mass (10; 32) is attached to the support means (14; 36),
said connection means (34, 42a, 42b) being provided with a predetermined breaking point interrupting the connection between the seismic mass (32) and the support means (36) when said seismic mass (32) is subjected to an acceleration exceeding a predetermined acceleration,
characterized in that
the support means (36), the seismic mass (32) and the connection means (34, 42a, 42b) are formed integrally from a silicon layer by means of a micromechanical method in such a way that the silicon layer is provided with an opening extending therethrough and having arranged therein the seismic mass (32), the border of said opening defining the support means (36), the seismic mass (32) being connected on a first side thereof to the neighbouring side of the support means (36) by a first bar-shaped connection piece (34) which defines the predetermined breaking point, and said seismic mass being connected to the side of the support means (36) located opposite said neighbouring side by means of a second and a third connection piece (42a, 42b), said second and third connection pieces (42a, 42b) being connected to the seismic mass (32) in the area of the first side of said seismic mass and extending symmetrically on both sides of the seismic mass (32) to the opposite side of the support means, said second and third connection pieces (42a, 42b) being implemented such that they do not substantially influence the mechanical properties of the seismic mass (32).

2. An acceleration threshold sensor according to claim 1, wherein the part of the silicon layer forming the support means (36) is provided on an oxide layer (38) which is provided on a silicon substrate (40).

3. An acceleration threshold sensor according to claim 1 or 2, wherein a closed current path is formed by the predetermined breaking point, said closed current path being interrupted when the connection between the seismic mass (32) and the support means (36) is interrupted.

4. An acceleration threshold sensor according to claim 3, wherein the current path is formed by a doped area in the silicon layer.

5. An acceleration threshold sensor according to claim 3, wherein the current path is formed by a conducting path (41) applied to the silicon layer.

6. An acceleration threshold sensor according to one of the claims 1 to 5, wherein the connection means (34, 42a, 42b) and the seismic mass (32) are enclosed by covers (50, 52) attached to the support means.

7. An acceleration threshold sensor according to one of the claims 1 to 6, comprising a plurality of seismic masses (32) and connection means (34, 42a, 42b) which are secured to the support means (36), the predetermined breaking points of the connection means (34, 42a, 42b) breaking in response to different predetermined accelerations.

8. A method of producing the acceleration threshold sensor comprising a support means (14; 36), a seismic mass (10; 32), and a connection means (12; 34) with the aid of which the seismic mass (10; 32) is attached to the support means (14; 36), said connection means (12; 34) being provided with a predetermined breaking point interrupting the connection between the seismic mass (10; 32) and the support means (14; 36) when said seismic mass (10; 32) is subjected to an acceleration exceeding a predetermined acceleration, said method being characterized by the following production steps:
providing a SIMOX substrate or another SOI substrate or a silicon substrate provided with a silicon oxide layer or a silicon start layer;
depositing a silicon epitaxial layer or a silicon CVD layer on a thin silicon film of the SIMOX substrate or on the oxide layer of the SOI substrate or on the silicon start layer;
producing a conducting-path system and a contacting system on the last layer deposited;
producing and structuring a passivation layer over the deposited layer and the metallization system and the contacting system, with the property that this layer acts as an etching mask during the subsequent trench-etching process and is not consumed, not fully consumed or fully consumed during said trench etching;
producing a back mask and carrying out a back-etching process, the oxide layer acting as an etch stop;
carrying out etching from the back of the wafer for removing the oxide layer;
carrying out a subsequent trench-etching process so as to form and expose sensor structures.

9. A method according to claim 8 for producing an acceleration threshold sensor according to one of the claims 1 to 7.

10. A method according to claim 8 or 9, comprising the additional method step of producing a doped area in the deposited silicon epitaxial layer after the application of said silicon epitaxial layer.

11. A method according to claim 8 to 10, wherein, after trench etching, the passivation layer serves as a passivation of the doped areas, of the metallization system and of the contacting system.

12. A method according to one of the claims 8 to 11, comprising the additional method step of applying a protective layer to and structuring it on the front of the silicon wafer before the trench etching and removing said protective layer after the trench etching.

13. A method according to one of the claims 8 to 12, comprising the additional method step of applying a complete or a partial protective layer to the back before the trench etching and removing said protective layer after the trench etching.

14. A method according to one of the claims 8 to 13, comprising the additional method step of trench etching making use of a photoresist mask.

## Revendications

1. Détecteur de valeur limite d'accélération aux caractéristiques suivantes :
un dispositif de support (36) ;
une masse sismique (32) ; et
un dispositif de liaison (34, 42a, 42b), par lequel la masse sismique (10 ; 32) est placée sur le dispositif de support (14 ; 36),
le dispositif de liaison (34, 42a, 42b) présentant un point de rupture de consigne qui interrompt la liaison entre la masse sismique (32) et le dispositif de support (36) lorsque la masse sismique (32) est soumise à une accélération excédant une accélération prédéterminée,
caractérisé par le fait que le dispositif de support (36), la masse sismique (32) et le dispositif de liaison (34, 42a, 42b) sont formés d'une seule pièce, à l'aide d'un procédé micromécanique, à partir d'une couche de silicium, de telle sorte que la couche de silicium présente une ouverture traversant celle-ci et dans laquelle est disposée la masse sismique (32) et dont la bordure définit le dispositif de support (36), la masse sismique (32) étant reliée, d'un premier côté de celle-ci, à l'aide d'un premier élément de liaison (34) en forme de poutre et définissant le point de rupture de consigne, au côté adjacent du dispositif de support (36) et la masse sismique étant reliée, à l'aide d'un second et d'un troisième élément de liaison (42a, 42b), au côté du dispositif de support (36) opposé au côté adjacent, les second et troisième éléments de liaison (42a, 42b) servant d'alimentation de courant et étant reliés, à l'endroit du premier côté de la masse sismique (32), à cette dernière et s'étendant de manière symétrique, sur les deux côtés de la masse sismique (32), vers le côté opposé du dispositif de support, les second et troisième éléments de liaison (42a, 42b) étant réalisés de telle sorte qu'ils n'affectent pas sensiblement les caractéristiques mécaniques de la masse sismique (32).

2. Détecteur de valeur limite d'accélération suivant la revendication 1, dans lequel la partie de la couche de silicium formant le dispositif de support (36) est placée sur une couche d'oxyde (38) placée sur un substrat de silicium (40).

3. Détecteur de valeur limite d'accélération suivant la revendication 1 ou 2, dans lequel est formé, par le point de rupture de consigne, un circuit de courant fermé qui est interrompu lorsque la liaison entre la masse sismique (32) et le dispositif de support (36) est interrompue.

4. Détecteur de valeur limite d'accélération suivant la revendication 3, dans lequel le circuit de courant est formé par un dopage de la couche de silicium.

5. Détecteur de valeur limite d'accélération suivant la revendication 3, dans lequel lequel le circuit de courant est formé par un chemin conducteur (41) appliqué sur la couche de silicium.

6. Détecteur de valeur limite d'accélération suivant l'une des revendications 1 à 5, dans lequel le dispositif de liaison (34, 42a, 42b) et la masse sismique (32) sont enclos par des recouvrements (50, 52) placés sur le dispositif de support.

7. Détecteur de valeur limite d'accélération suivant l'une des revendications 1 à 6, présentant une pluralité de masses sismiques (32) et de dispositifs de liaison (34, 42a, 42b) fixés au dispositif de support (36), les points de rupture de consigne des dispositifs de liaison (34, 42a, 42b) se cassant à différentes accélérations prédéterminées.

8. Procédé de fabrication du détecteur de valeur limite d'accélération avec un dispositif de support (14 ; 36), une masse sismique (10 ; 32), et un dispositif de liaison (12 ; 34), par lequel la masse sismique (10 ; 32) est placée sur le dispositif de support (14 ; 36), le dispositif de liaison (12 ; 34) présentant un point de rupture de consigne qui interrompt la liaison entre la masse sismique (10; 32) et le dispositif de support (14; 36) lorsque la masse sismique (10 ; 32) est soumise à une accélération excédant une accélération prédéterminée, caractérisé par les étapes de fabrication suivantes consistant à :
préparer un substrat SIMOX ou un autre substrat SOI ou un substrat de silicium avec une couche d'oxyde de silicium et une couche de départ de silicium ;
déposer une couche de silicium épitaxiale ou une couche de silicium par DCV sur le mince film de silicium du substrat SIMOX ou sur la couche d'oxyde du substrat SOI ou sur la couche de départ de silicium ;
générer un système de chemin conducteur et un système de mise en contact sur la couche déposée en dernier lieu ;
générer et structurer une couche de passivation au-dessus de la couche déposée et du système de métallisation et du système de mise en contact, avec la caractéristique que cette couche sert de masque de gravure lors de la gravure de tranchées successive et qu'elle n'est pas, pas entièrement ou qu'elle est entièrement consommée lors de la gravure de tranchées ;
réaliser un masque du côté arrière et effectuer une gravure du côté arrière, la couche d'oxyde agissant comme arrêt de gravure :
effectuer une gravure du côté arrière, pour éliminer la couche d'oxyde ;
ensuite, effectuer la gravure de tranchées, pour former et dégager des structures de détecteur.

9. Procédé, suivant la revendication 8, de fabrication d'un détecteur de valeur limite d'accélération suivant l'une des revendications 1 à 7.

10. Procédé suivant la revendication 8 ou 9, avec l'étape de procédé supplémentaire consistant à générer un dopage dans la couche de silicium épitaxiale déposée, après l'application de cette dernière.

11. Procédé suivant l'une des revendications 8 à 10, dans lequel la couche de passivation sert, après la gravure de tranchées, de passivation des dopages, du système de métallisation et du système de mise en contact.

12. Procédé suivant la revendication 8 ou 11, avec l'étape de procédé supplémentaire consistant à appliquer et structurer une couche de protection sur la face avant du disque de silicium, avant la gravure de tranchées, et à l'éliminer après la gravure de tranchées.

13. Procédé suivant la revendication 8 ou 12, avec l'étape de procédé supplémentaire consistant à appliquer une couche de protection complète ou partielle sur la face arrière, avant la gravure de tranchées, et à l'éliminer après la gravure de tranchées.

14. Procédé suivant la revendication 8 ou 13, avec l'étape de procédé supplémentaire consistant à graver des tranchées par l'intermédiaire d'un masque de photolaque.
